# EUROPÄISCHE PATENTANMELDUNG

(11) **EP 1 166 636 A1**
(43) Veröffentlichungstag der Anmeldung: **02.01.2002**
(21) Anmeldenummer: 01113551.4
(22) Anmeldetag: 13.06.2001
(51) Int. Cl.: A22C 13/00

(54) **Schlauchförmige Nahrungsmittelhülle**

(30) Priorität: 26.06.2000 DE 10031045
(71) Anmelder: Wolff Walsrode AG, 29655 Walsrode (DE)
(72) Erfinder: Krallmann, Anton, 29683 Fallingbostel (DE); Decker, Gerhard, 29664 Walsrode (DE)
(74) Vertreter: Pettrich, Klaus-Günter, Dr.

(57) **Zusammenfassung**

Beschrieben wird eine schlauchförmige Nahrungsmittelhülle, enthaltend eine Mischung aus Wasser, Wasserstoffperoxid, Essigsäure und Peressigsäure als Befeuchtungsmittel.

## Beschreibung

Die Erfindung bezieht sich auf eine schlauchförmige Nahrungsmittelhülle, insbesondere künstliche Wursthülle, z.B. aus reiner Cellulose oder einem Cellulosehydrat mit einer äußeren Überzugsschicht, die ein fungizides Mittel enthält.

Nahrungsmittelhüllen, die z.B. aus Cellulosehydrat bestehen, können während der Lagerung beim Hersteller, beim Konfektionierer und beim Verarbeiter durch den Befall mit unerwünschten Schimmelpilzen und Mikroorganismen unbrauchbar werden.

Das Risiko wird um so größer, je höher der Feuchtigkeitsgehalt der Wursthüllen eingestellt wird. Ungünstige Lagerparameter, wie hohe Raumtemperatur, beschleunigen das unerwünschte Wachstum von Mikroorganismen.

Für einen Zwischenprozess der Konfektionierung, insbesondere beim Raffen, ist es unumgänglich den Cellulosedarm/ Cellulosefaserdarm mit und ohne Sperrschicht zu befeuchten, um eine ausreichende Flexibilität der Hülle für diesen Prozess zu gewährleisten. In diesem Stadium ist diese Ware daher mikrobiologisch sehr gefährdet.

Zur Verhinderung dieser Gefährdung ist es bekannt, auf der äußeren Oberfläche von Celluloseschläuchen als fungizides Mittel Glycerinmonolaurat aufzubringen (EP-A-0 141 066, US-A-4 662 403). Diese Verbindung hat gegenüber wasserlöslichen fungiziden Verbindungen den Vorteil, dass sie auf der äußeren Oberfläche auch nach der Verarbeitung der Hülle, insbesondere auch nach der Heißwasserbehandlung der mit Wurstmasse gefüllten Wursthülle, noch in ausreichender Menge vorhanden ist. Mit diesem fungiziden Mittel sollen auch die in einer Zweitverpackung, z.B. in einem Kunststoffbeutel, eingeschlossenen Würste mit einer Wursthaut aus Cellulose vor dem unerwünschten Befall der Celluloseschicht mit Schimmelpilzen geschützt werden.

Weiterhin ist aus DE-A-1 900 343 bekannt, dass ein Mittel aus Didecyldimenthylammonium-Verbindung mit einer Menge von etwa 10 mg/m², insbesondere etwa 20 mg/m² auf den Celluloseschläuchen aufgetragen wird, wobei es auch möglich ist reduzierte Mengen von unter 20 oder sogar unter 15 mg/m² dieser fungiziden Verbindung einzusetzen, sofern deren Wirkung durch Zusatz von anderen fungiziden Verbindungen verstärkt wird. Für Wursthüllen, die vor oder nach dem Füllen mit Wasser behandelt werden, ist eine höhere Auftragsmenge erforderlich. Im allgemeinen wird dann eine Mindestmenge von 60, insbesondere 80 mg/m² erforderlich. Für die obere Grenze der Auftragsmenge sind lebensmittelrechtliche Vorschriften zu beachten. Im allgemeinen wird die Auftragsmenge 300, insbesondere 200 mg/m² nicht überschritten.

Aus DE-A 3 220 488 ist bekannt, dass ein Einsatz von peroxogruppenhaltigen Verbindungen, aufgetragen über Tauchverfahren oder über Sprühverfahren an der Raffmaschine, im Zusammenhang mit Glycerin und einem hohem Wassergehalt die Anfälligkeit des Cellulosefaserdarms gegenüber Keimen reduziert.

Alle diese Mittel besitzen den Nachteil, dass sie die Qualität des zu verpackende Produktes (Wurstmasse) beeinflussen können und auch in diesem nachgewiesen werden können.

Aufgabe der vorliegenden Erfindung war es, eine schlauchförmige Nahrungsmittelhülle zur Verfügung zu stellen, die während der Lagerung vor dem Befüllen keimfrei ist und nach dem Befüllen mit dem Lebensmittelgut keine Schadstoffe an das Füllgut abgibt.

Gegenstand der Erfindung ist eine schlauchförmige Nahrungsmittelhülle, enthaltend eine Mischung aus Wasser, Wasserstoffperoxid, Essigsäure und Peressigsäure. Üblicherweise ist die Nahrungsmittelhülle mit dieser Mischung befeuchtet.

Der Einsatz geringer Mengen von Peressigsäure (PES) zum Befeuchtungsmedium (Wasser) hält schon in geringster Konzentration den Darm keimfrei. Durch die spontane ablaufende chemische Umwandlung von Peressigsäure in die Bestandteile Wasser, Sauerstoff und Essigsäure ist gewährleistet, dass auf den Darm und das zu schützenden Produkt Wurstmasse keinerlei Fremdstoffe übergehen. Die Essigsäure wird als Konservierungsstoff unter der Bezeichnung E260 geführt.

Die PES liegt niemals als Einzelsubstanz vor, sondern ist immer ein Gemisch mit 4 Komponenten, die aus folgenden Stoffen bestehen: Peressigsäure, Essigsäure, Wasserstoffperoxid und Wasser. In hoher Konzentration der Peressigsäure befinden sich diese vier Komponenten im thermodynamischen Gleichgewicht. Für den erfindungsgemäßen Einsatz wird die Peressigsäure sehr stark verdünnt, so dass sie nicht weiter im Gleichgewicht steht. Die Peressigsäure bildet sich unter Abspaltung von radikalem Sauerstoff zu Essigsäure. Die hervorragend lipidlöslichen Peressigsäure-Moleküle durchdringen damit alle Zellmembranen und bringen ihren aktiven Sauerstoff bis zu den ungeschützten, oxidationsempfindlichen Stoffwechselenzymen. Durch diese Art der Wirkung auf die Keime kann die Konzentration der Peressigsäure bei dieser Anwendung sehr niedrig gehalten werden.

Üblicherweise wird von einer Mischung als Stammlösung ausgegangen, die 38 bis 44 Gew.-% Peressigsäure, 12 bis 16 Gew.-% Waserstoffperoxid sowie 20 bis 25 Gew.-% Essigsäure sowie Wasser enthält. Derartige Mischungen sind kommerziell erhältlich (z.B. unter der Bezeichnung Wofasteril® E400). Für den erfindungsgemäßen Einsatz wird diese Mischung entsprechend um den Faktor 1000 bis 2000 verdünnt.

Ein weiterer Vorteil dieses Systems ist die einstellbare Zeit, in der der Umwandlungvorgang von der Peresssigsäure in Esssigsäure abgeschlosssen wird. Diese Zeitdauer steht im direktem Zusammenhang mit dem pH Wert der Lösung. Im neutralem Bereich dauert die Umwandlung wesentlich länger als im sauren Bereich. Dieser Zusammenhang ist für den Einsatz in der Anwendung von sehr großem Vorteil. Das Aufbringen der Peressigsäure auf dem Darm geschieht in dem Zwischenprozess Befeuchten. Mit dem Befeuchten wird sichergestellt, dass die Hülle eine ausreichende Flexibilität für diesen Prozess besitzt. Sofort nach dem Befeuchten der Schlauchhülle ist dieser keimarm.

Da das Befeuchten und das Raffen nicht an gleichen Maschinen passieren, wird immer eine gewisse Zeitdauer zwischen den Vorgängen verstrichen sein. Außerdem ist es auch für die nachfolgenden Prozesse hier Raffprozess wichtig, dass in der Schlauchhülle ein gewisser Anteil von aktiver Peressigsäure verbleibt, der noch nicht in Essigsäure umgewandelt ist. Diese aktive Peressigsäure verhindert Keimwachstum für die Keime, die z.B. beim Raffprozess oder bei der Handabnahme der Schlauchhüllen von außen auf dem Darm aufgetragen werden könnten.

Die noch nicht umgewandelte Peressigsäure wird die beim Raffprozess übertragenen Keime auf dem Darm abtöten. Diese Darmware wird nun unter möglichst keimfreier Umgebung in einem Karton mit oder ohne Innensack aus wasserundurchlässigem Material wie z.B. Polyethylen oder Polypropylen verpackt.

Die Nahrungsmittelhülle kann aus Cellulose bzw. Cellulosehydrat, regenerierter Cellulose oder Polyamid bestehen. Gegebenenfalls kann die Hülle auch Sperrschichten enthalten. Die Erfindung umfasst auch Hüllen, die nicht gewässert werden müssen.

Das Hüllenmaterial besteht bevorzugt aus Cellulose, nämlich Cellulosehydrat, das auch als regenerierte Cellulose oder Zellglas bezeichnet wird. Die Celluloseschicht enthält vorzugsweise in ihrer Wandung eine Faserverstärkung, z.B. aus Hanffaserpapier, die auf einer oder beiden Oberflächen mit Cellulose bedeckt ist.

Die Nahrungsmittelhülle aus Cellulose wird auf übliche Weise beispielsweise nach dem Viskoseverfahren hergestellt. Hierbei wird Viskose durch eine Ringdüse extrudiert oder eine zu einem Schlauch geformte Faserbahn, z.B. aus Papier oder Hanffasern, durch eine Ringdüse auf der Innen- und/oder Außenseite mit alkalischer Viskoselösung beschichtet und die Viskose mit einer sauren Fällflüssigkeit behandelt, welche die Koagulation der Viskose bewirkt. Die Viskoselösung enthält gegebenenfalls die zur Ausbildung einer weißen oder farbigen Hülle erforderlichen Farbstoffpigmente. Zur Herstellung verstärkungsfreier Cellulosehüllen wird die extrudierte Viskose direkt in das Fällbad ausgepresst.

Der erhaltene gegebenenfalls faserverstärkte Schlauch aus Cellulosehydrat-Gel kann vor dem Trocknen auf seiner Außenseite mit der erfindungswesentlichen Beschichtung versehen werden. Der Auftrag kann auf die übliche Weise, z.B. durch Tränken in einem Flüssigkeitsbad, Walzenauftrag oder Besprühen erfolgen.

Die Konzentration der Peressigsäure in der wässrigen Beschichtungsflüssigkeit beträgt insgesamt 0,02 bis 0,004 Gew.-% bezogen auf die Mischung.

Wird zur Verstärkung der fungiziden Wirkung zusätzlich noch ein Natriumsalz wie z.B. Natriumsorbat, eingesetzt, so wird der Anteil in der Beschichtungsflüssigkeit entsprechend der gewünschten Zusammensetzung der Überzugsschicht eingestellt.

Wird die Beschichtungsflüssigkeit während der Darmproduktion in einem Bad aufgebracht, so enthält sie zweckmäßigerweise noch einen oder mehrere Weichmacher für die Cellulose, insbesondere ein- oder mehrwertige Alkohole, wie z.B. Glycerin, Propandiol (Propylenglykol) oder Äthanol oder deren Mischungen in üblicher Menge.

Wird die Beschichtungsflüssigkeit während der Darmproduktion in einem Sprühverfahren aufgebracht, so enthält sie zweckmäßigerweise noch einen oder mehrere Komponenten für die Cellulose, insbesondere ein- oder mehrwertige Alkohole, wie z.B. Glycerin, Propandiol (Propylenglykol) oder deren Mischungen in üblicher Menge. Der Schlauch wird danach wie üblich im aufgeblasenen Zustand getrocknet und zwischengelagert.

Für einen Zwischenprozess der Konfektionierung insbesondere beim Raffen ist unumgänglich, die Ware zu befeuchten, um eine ausreichende Flexibilität der Hülle für diesen Prozess zu gewährleisten. In der Regel wird diese Feuchtigkeitserhöhung durch Zuführung von Wasser in der Höhe von 25 bis 35 Gew.-% bezogen auf das Trockengewicht des Darm erreicht. Dabei können die üblichen Verfahren wie Tauchen und Besprühen zum Einsatz kommen. Für den außenlackierten Faserdarm kann die Befeuchtung auch mit der Blasentechnik durchgeführt werden.

Mit einer Konzentration der Peressigsäure von 0,01 bis 0, 1 % insbesondere von 0,02 bis 0,04 Gew.-% bezogen auf die Befeuchtungsflüssigkeit kann die Schlauchhülle den wirksamen Schutz gegen Keime erhalten.

Der vorbefeuchtete Schlauch wird auf einer üblichen Raffvorrichtung gerafft, wobei die Raffmaschine aber insbesondere die mit dem Darm in Berührung kommenden Teile einer gründlichen Reinigung und Desinfizierung unterzogen worden sind. Wichtig ist auch der keimarme Umgang mit den entsprechenden Maschinen.

### Beispiele

Die erhaltenen Raupen werden in einem luftdichten feuchtigkeitsundurchlässigen Folienbeutel mehrere Monate bei etwa 25-30°C gelagert. Die Ergebnisse sind in der folgender Tabelle aufgeführt.

### Beispiel 1

Ein Faserdarm Kaliber 39 Walsroder ® wurde mit einer Lösung aus 0,1 % aus 42 % Peressigsäure und Wasser auf 30 % Gewichtsprozent bezogen auf den trockenen Darm befeuchtet. Nach einer Wartezeit von 2 Wochen wurde dieser Darm auf einer desinfizierten Raffmaschine auf 32 mm Rohr gerafft und in einem Netz eingepackt und in einem 100 um Polyethylensack verpackt.

### Vergleichsbeispiel 1

Ein Faserdarm Kaliber 39 Walsroder FR® wurde mit einer Lösung aus Zitronensäure und Natriumbenzoat auf 30 % Gewichtsprozent bezogen auf den trockenen Darm befeuchtet.

Nach einer Wartezeit von 2 Wochen wurde dieser Darm auf einer desinfizierten Raffmaschine auf 32 mm Rohr gerafft und in einem Netz eingepackt und in einem 100 µm Polyethylensack verpackt

### Beispiel 2

Ein Faserdarm Kaliber 39 Walsroder FR® wurde mit einer Lösung aus 0,1 % aus 42 % Peressigsäure und Wasser auf 30 % Gewichtsprozent bezogen auf den trockenen Darm befeuchtet. Zusätzlich wurde mit Natriumbenzoat der pH-Wert dieser Lösung von 2 auf ca. 7 gebracht. Nach einer Wartezeit von 2 Wochen wurde dieser Darm auf einer desinfizierten Raffmaschine auf 32 mm Rohr gerafft, in einem Netz eingepackt und in einem 100 µm Polyethylensack verpackt

### Prüfmethoden:

### 1. Keimmessung:

Die Keimmessung wird mit Hilfe eines Teststreifen unter dem Handelsnamen Envirocheck® Contakt YM(S) von der Firma Merck durchgeführt. Das zu prüfenden Schlauchhüllenoberfläche wird von dem Teststreifen berührt und anschließende wird dieser Teststreifen bei 30 °C im Wärmekammer gelagert. Durch Vergleich der gelagerten Probe mit dem vom Hersteller Merck mitgeliefertem Schaubild kann die Größe der Verkeimung in KBC/cm² angegeben werden (KBC = Kolonien Bildende Einheiten).

### Beispiel

| Nr. | Vergleichsbeispiel 1 | Beispiel 1 | Beispiel 2 |
|---|---|---|---|
| Darmware | Walsroder FR® 39 | Walsroder FR® 39 | Walsroder FR® 39 |
| Feuchtigkeitsgehalt nach Befeuchtung(%) | 30 | 30 | 30 |
| Konzentration: Desinfektionsmittel | Zitronensäure und Natrium Bei pH-Wert = 2 | 0,1 % Peressigsäure bei einem Peressig-gehalt von 42 % und bei pH-Wert = 2. | 0,1 % Peressigsäure bei einem Peressig-gehalt von 42 % und bei pH-Wert = 7. |
| Messung Keimanzahl der Darmoberfläche nach dem Raffen | 0,6 KBC/cm² | Nicht messbar | Nicht messbar |
| Messung der Keimanzahl der Darmoberfläche nach einer Wartezeit von 2 Wochen nach dem Raffen | 2,3 KBC/cm² | Nicht messbar | Nicht messbar |
| Messung der Keimanzahl der Darmoberfläche nach einer Wartezeit von 4 Wochen nach dem Raffen | 6,0 KBC/cm² | 0,6 KBC/cm | Nicht messbar |

## Patentansprüche

1. Schlauchförmige Nahrungsmittelhülle, enthaltend eine Mischung aus Wasser, Essigsäure und Peressigsäure.

2. Nahrungsmittelhülle nach Anspruch 1, **dadurch gekennzeichnet, dass** sie eine Cellulosehydrat- oder regenerierte Cellulosehülle ist.

3. Nahrungsmittelhülle nach einem der Ansprüche 1 bis 6, **dadurch gekennzeichnet, dass** die Nahrungsmittelhülle gerafft ist.

4. Nahrungsmittelhülle nach einem der vorherigen Ansprüche, **dadurch gekennzeichnet, dass** die Mischung aus Wasser, Wasserstoffperoxid, Essigsäure und Peressigsäure 0,02 bis 0,04 Gew.-% Peressigsäure enthält.

5. Nahrungsmittelhülle nach einem der vorherigen Ansprüche, **dadurch gekennzeichnet, dass** sie in einer Schutzhülle aus wasserundurchlässigem Material verpackt ist.

6. Verfahren zur Keimfreihaltung schlauchfürmiger Nahrungsmittelhüllen auf der Basis von Cellulose, **dadurch gekennzeichnet, dass** die Nahrungsmittelhüllen vor dem Raffen mit einer Mischung aus Wasser, Wasserstoffperoxid, Essigsäure und Peressigsäure befeuchtet wird.
